# EUROPÄISCHE PATENTSCHRIFT

(11) **EP 0 613 564 B1**
(45) Veröffentlichungstag und Bekanntmachung des Hinweises auf die Patenterteilung: **29.10.1997**
(21) Anmeldenummer: 93918999.9
(22) Anmeldetag: 15.09.1993
(51) Int. Cl.: G02B 21/00

(54) **VERFAHREN UND VORRICHTUNG ZUR MESSUNG VON BELICHTUNGSZEITEN IN OPTISCHEN GERÄTEN MIT MIKROSKOPISCHEM ABBILDUNGSSTRAHLENGANG**
METHOD AND DEVICE FOR MEASURING EXPOSURE TIMES IN OPTICAL INSTRUMENTS WITH A MICROSCOPIC IMAGING-BEAM PATH
PROCEDE ET DISPOSITIF POUR LA MESURE DE TEMPS DE POSE DANS DES APPAREILS OPTIQUES COMPORTANT UN TRAJET DE FAISCEAU D'IMAGERIE MICROSCOPIQUE

(30) Priorität: 21.09.1992 DE 4231506
(43) Veröffentlichungstag der Anmeldung: 07.09.1994
(73) Patentinhaber: LEICA MIKROSKOPIE UND SYSTEME GmbH, D-35530 Wetzlar (DE)
(72) Erfinder: REMER, Lucius, D-64546 Mörfelden-Walldorf (DE); GILBERT, Manfred, D-35606 Solms (DE); HERMANN, Frank, D-56077 Koblenz (DE)
(74) Vertreter: Stamer, Harald, Dipl.-Phys.
(86) Internationale Anmeldenummer: DE9300863
(87) Internationale Veröffentlichungsnummer: WO9407164

(56) Entgegenhaltungen:
- EP-A- 0 265 773
- DE-A- 2 908 334
- DE-C- 3 503 175

## Beschreibung

Die Anmeldung betrifft ein Verfahren sowie eine Vorrichtung zur Messung von Belichtungszeiten in optischen Geräten, die einen mikroskopischen Abbildungsstrahlengang, einen Beobachtungsstrahlengang, einen Meßstrahlengang und einen Einspiegelungsstrahlengang aufweisen.

Bei der Messung von Belichtungszeiten in einer mikrofotografischen Einrichtung, einer Nikroskopkammer oder einer Fotometrie-Einrichtung wird in den meisten Fällen das Licht des Zwischenbildes in einen Beobachtungs- und einen Meßstrahlengang geteilt. Außerdem wird nur ein bestimmter Ausschnitt des Sehfeldes zur Messung herangezogen. Die bekannten Belichtungsmeß-Verfahren bzw. -Vorrichtungen lassen sich in drei System-Gruppen unterteilen; sie sind in den Figuren 1-3 schematisch dargestellt. Bekannte Verfahren bzw. Vorrichtungen sind auch in den Dokumenten DE-A- 29 08 334 und EP-A- 265 773 beschrieben.

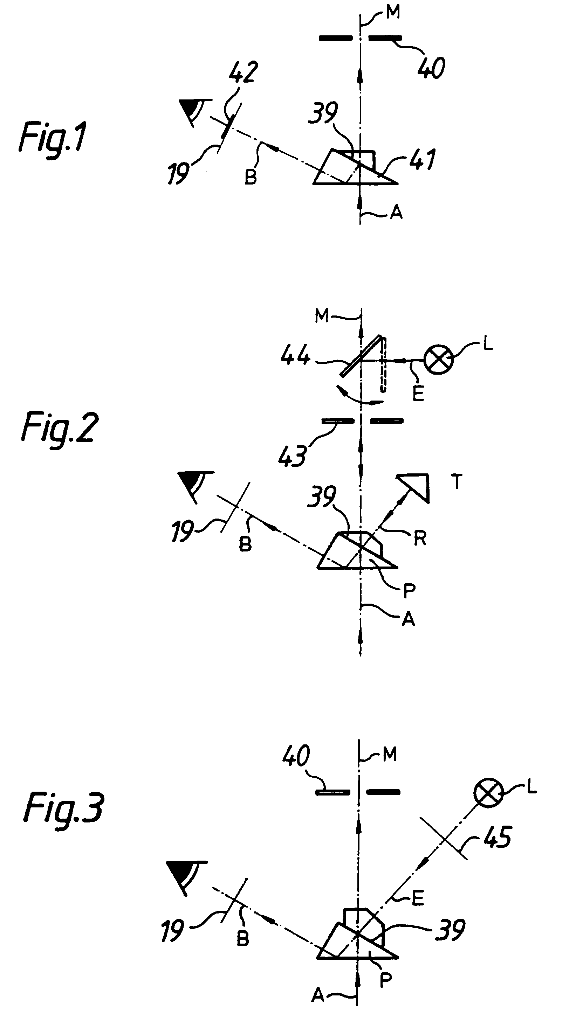

In Figur 1 ist ein Abbildungsstrahlengang A und in dessen Verlängerung ein Meßstrahlengang M dargestellt, in welchem eine vorzentrierte, feste Meßblende 40 positioniert ist. Vom Umlenkprisma 41 wird ein Beobachtungsstrahlengang B abgezweigt, der an der eingezeichneten Stelle eine Okular-Zwischenbildebene 19 aufweist. Die Meßblende 40 befindet sich in einer zur Ebene 19 konjugierten Ebene. Am Ort von 19 befindet sich eine exakt justierte Strichplatte, die die Lage des Meßblendenbildes im Zwischenbild markiert. Dieses bekannte Prinzip wird bei einfachen Aufsatzkameras für Mikroskope verwendet. Die Nachteile bestehen darin, daß nur feste Meßblenden möglich sind. Außerdem ist das Strichbild der Strichplatte 42 auf dunklen Präparatstellen nicht sichtbar. Zwar wäre es nach diesem bekannten Einspiegelungs-Prinzip auch möglich, mehrere Meßblenden zu verwenden, die angewählte Meßblende kann jedoch im Okulareinblick nicht hervorgehoben dargestellt werden.

In Figur 2 ist eine weitere bekannte Variante dargestellt, bei der eine orts- und größenvariable Meßblende 43 rückwärtig mittels einer Lichtquelle L, einem Klappspiegel 44, einem Prismensystem P mit teildurchlässiger Fläche 39 und einem Tripelspiegel T in die Okular-Zwischenbildebene 19 eingespiegelt wird. Mit dieser bekannten Anordnung wird die Form und die Lage einer Detail-Meßblende in ihrem momentanen Zustand dargestellt. Dieses Prinzip ist beispielsweise in den Rückspiegel-Binotuben realisiert. Es kann die ortsvariable Meßblende einer Aufsatzkamera oder die größenvariable Meßblende eines Fotometers rückgespiegelt werden. Die Nachteile dieser Anordnung sind insbesondere darin zu sehen, daß sie einen hohen optischen und mechanischen Aufwand erfordern und daß ein vorhandener Streulichtanteil zu unerwünschten Aufhellungen und Reflexen führt, da nur maximal 25% des rückgespiegelten Lichtes zur Verfügung stehen. Nachteilig ist weiterhin, daß das Präparat am Ort der Blende durch die Rückspiegelung beleuchtet wird und daher nur alternativ angezeigt oder gemessen werden kann.

Bei dem dritten bekannten Einspiegelungs-System, daß wiederum eine Meßblende 40 im Meßstrahlengang M und ein Prismensystem P mit teildurchlässiger Fläche 39 aufweist, wird über einen Einspiegelungsstrahlengang E die Kontur der Meßblende 40 in das Okular-Zwischenbild 19 eingespiegelt. Der die Konturen der Meßblende aufweisende Träger ist in der zu 19 konjugierten Ebene 45 positioniert. Die in Figur 3 beschriebene Anordnung wird für die Format-Darstellung in auf dem Markt befindlichen fotomikroskopischen Einrichtungen benutzt. Zwar wäre es im Prinzip denkbar, synchronisierte, kontinuierlich verstellbare Meß- und Einspiegelblenden zu verwenden. Die Bewegung sowie die Form-und/oder Größenänderung einer Meßblende müßte jedoch von der im Einspiegelungsstrahlengang E positionierten Einspiegelblende exakt nachvollzogen werden. Dies bedeutet jedoch einen extrem hohen mechanischen Aufwand, der unter den obwaltenden Kosten- und Fertigungsgesichtspunkten nicht zu realisieren ist. Als weiterer Nachteil dieses dritten bekannten Einspiegelungs-Prinzips ist also zu konstatieren, daß variable Meßblenden und deren komplementäre Konturierungen nur schwer realisierbar sind.

Der Erfindung liegt daher die Aufgabe zugrunde, die Nachteile der bekannten Verfahren bzw. Anordnungen zu vermeiden und ein Einspiegelungs-Verfahren bzw. -System anzugeben, bei dem die im Meßstrahlengang angewählte Meßblenden-Stellung gleichzeitig im Beobachtungsstrahlengang hervorgehoben dargestellt wird.

Die Aufgabe wird durch ein Verfahren bzw. Vorrichtung der eingangs genannten Art gelöst, wie es im Anspruch 1 bzw. im Anspruch 5 in deren jeweiligen kennzeichnenden Teilen angegeben ist. Weitere vorteilhafte Ausgestaltungen ergeben sich aus den zugeordneten Unteransprüchen. Das erfindungsgemäße Verfahren bzw. die erfindungsgemäße Vorrichtung werden anhand der Zeichnungen näher erläutert. Es zeigen in rein schematischer Darstellung:
- Fig. 1-3:: drei bekannte Belichtungsmeßverfahren bzw. ihre entsprechenden Vorrichtungen;
- Fig. 4:: eine erfindungsgemäße Vorrichtung gemäß einer ersten Ausführungsform;
- Fig. 5a und 5b:: zwei Meßblenden unterschiedlicher Dimensionierung im Sehfeld;
- Fig. 6:: ein Strichbild mit Bildern von Kontur-Fragmenten;
- Fig. 7:: eine Meßblenden-Platte;
- Fig. 8a und 8b:: zwei unterschiedliche Wirkstellungen der Meßblenden-Platte im Meßstrahlengang;
- Fig. 9:: eine Masken-Platte;
- Fig. 10a und 10b:: verschiedene Wirkstellungen der Masken-Platte im Einspiegelungsstrahlengang;
- Fig. 11a:: eine Meßblenden-Scheibe mit drei Rechteck-Blenden;
- Fig. 11b:: zwei sich teilweise überlappende Meßblenden-Scheiben in Wirkstellung im Meßstrahlengang;
- Fig. 11c:: neun resultierende Meßblenden-Formen.

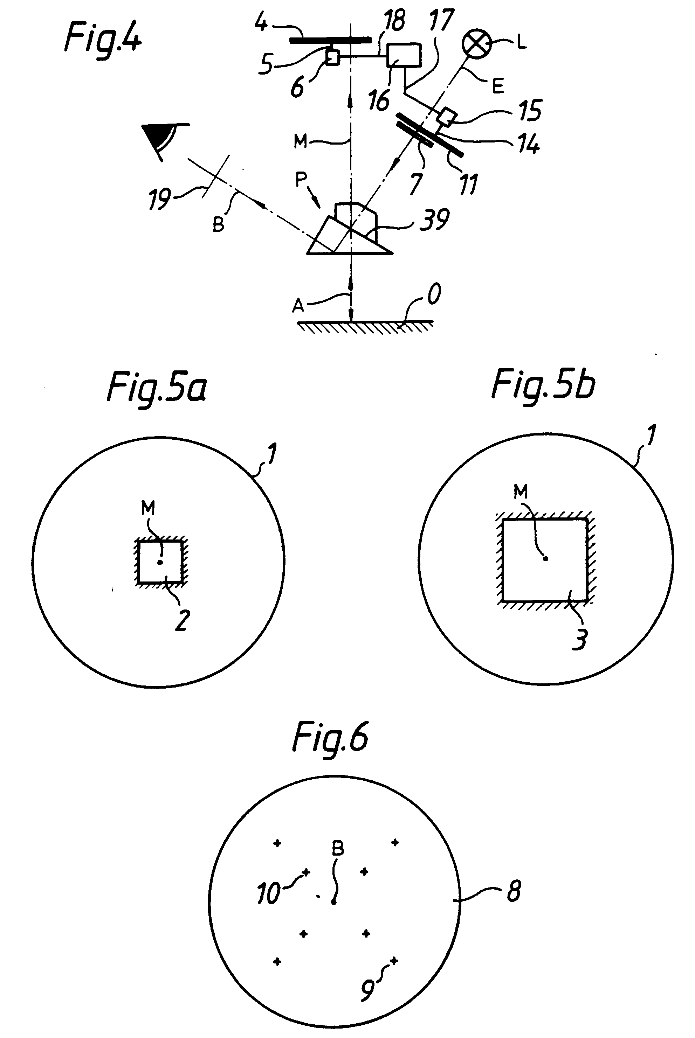

In Fig. 4 ist die erfindungsgemäße Vorrichtung schematisch dargestellt, wobei die Anordnung der einzelnen Teil-Strahlengänge aus Fig. 3 übernommen wurde. Von einem Objekt 0 geht ein Abbildungsstrahlengang A in Richtung der vertikalen optischen Achse des Gesamtsystems bis zu einer nicht mit dargestellten fotometrischen Meßeinrichtung. Mit M ist der entsprechende Meßstrahlengang gekennzeichnet. Ein Prismensystem P enthält eine teildurchlässige Fläche 39, an der ein Beobachtungsstrahlengang B ausgespiegelt wird. Mit 19 ist die Okular-Zwischenbildebene angedeutet. Ein Einspiegelungsstrahlengang E geht von einer Lichtquelle L aus. In einer zu 19 und zur Oberfläche des Objektes 0 konjugierten Ebene befindet sich im Einspiegelungsstrahlengang E eine Strichplatte 7 und in deren unmittelbarer Nähe eine Masken-Platte 11, die mittels eines Motors 15 und einer zugeordneten Drehachse 14 beweglich gehaltert ist. Im Meßstrahlengang M befindet sich - ebenfalls in einer zu 19 konjugierten Ebene - eine Meßblenden-Platte 4, die mittels eines Motors 6 und einer Drehachse 5 beweglich gehaltert ist. Der Einspiegelungsstrahlengang E verläuft im Bereich des Prismensystems P derart, daß er die teildurchlässige Fläche 39 durchsetzt und von hier aus mit dem Beobachtungsstrahlengang zusammenfällt. Eine Synchronisier-Einrichtung 16 verbindet über Leitungen 18 bzw. 17 den Motor 6 bzw. den Motor 15.

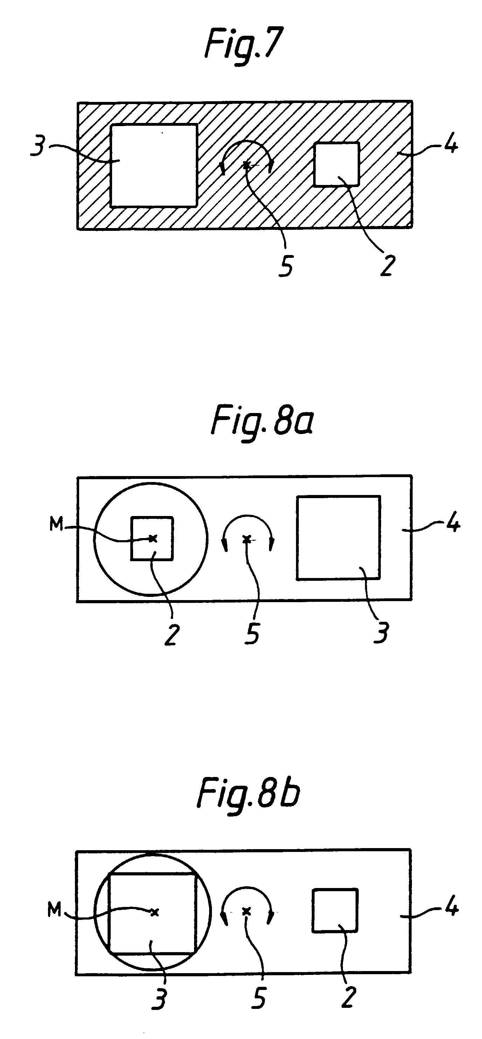

Auf der Meßblenden-Platte 4, die als opake Scheibe ausgebildet ist, befinden sich, wie aus Fig. 7 ersichtlich, zwei quadratische Ausnehmungen, die als große Meßblende 3 bzw. als kleine Meßblende 2 fungieren. In Fig. 7 ist mit dem Durchstoßpunkt 5 die Spur der Drehachse der Meßblenden-Platte 4 angezeigt. Mit dem sphärischen Doppelpfeil soll angedeutet werden, daß die Platte 4 um die Drehachse 5 motorisch verschwenkt werden kann.

In den Fig. 8a und 8b sind die beiden prinzipiellen Stellungen der Meßblenden-Platte 4 dargestellt. In Fig. 8a befindet sich die kleine Meßblende 2 in Wirkstellung, das heißt im Bereich des Meßstrahlengangs M. In Fig. 8b befindet sich nach einer Drehung von 180° um die Drehachse 5 die große Meßblende 3 in Wirkstellung. Die Konturen bzw. lediglich Konturen-Fragmente der Meßblenden 2 bzw. 3 sind invers auf der Strichplatte 7 angebracht. Die Konturen können aus ausgezogenen Linien, gestrichelten Linien oder Punktierungen bestehen. Es ist aber auch möglich, daß lediglich die Eckpunkte von Quadraten als Kontur-Fragmente auf der Strichplatte 7 invers aufgebracht werden. Diese Konturierungen auf der Strichplatte 7 sind lichtdurchlässig, sodaß bei Einspiegelung der Konturierungen im Okular-Zwischenbild 19 des Beobachtungsstrahlengangs B entsprechende helle Bilder dieser Konturierungen erscheinen. In Fig. 6 ist ein derartiges Strichbild 8 dargestellt. Es besteht aus vier ein kleines Quadrat markierenden hellen Kreuzen 10 und - zentrosymmetrisch - aus vier ein großes Quadrat markierenden hellen Kreuzen 9. Damit werden kontinuierliche Konturen bzw. diskontinuierliche Konturen-Fragmente der zur Auswahl stehenden Meßblenden 2 bzw. 3 für den Beobachter als helle Kennungen auf dem mikroskopischen Objektbild im Beobachtungsstrahlengang B erkennbar.

Um dem Beobachter nicht die gesamten Kennungs-Informationen der Strichplatte 7 gleichzeitig anzubieten, ist in unmittelbarer Nähe zur Strichplatte 7 und parallel zu ihr eine Masken-Platte 11 drehbeweglich angeordnet.

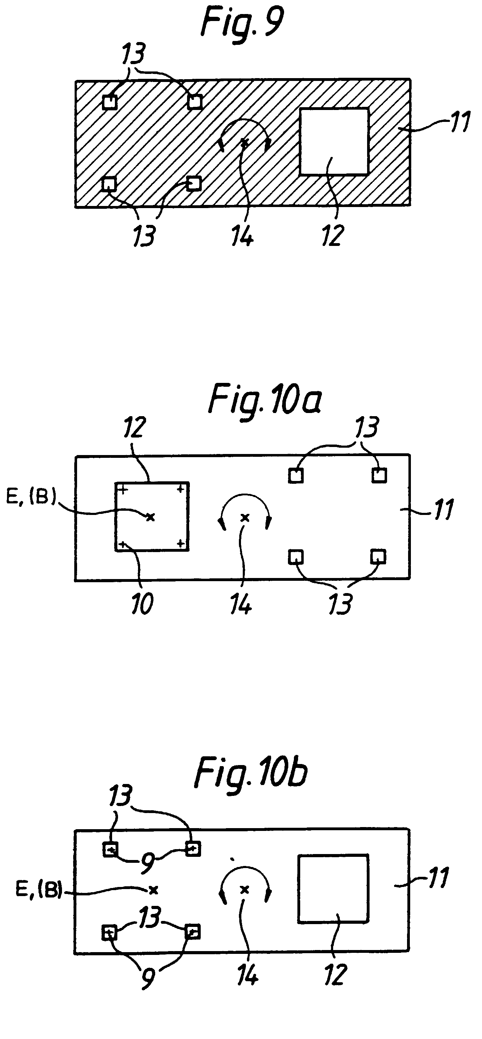

In Fig. 9 ist dargestellt, daß diese Masken-Platte 11 aus opakem Material besteht und daß sie eine erste Maske 12 aufweist, die quadratisch ausgebildet ist, und ein zweites System von kleinen quadratischen Masken 13 enthält. Mit 14 ist der Durchstoßpunkt der Drehachse für die Masken-Platte 11 angegeben; der sphärische Doppelpfeil deutet an, daß die Masken-Platte 11 um 180° verschwenkt werden kann.

In Fig. 10a ist die Position der Masken-Platte 11 derart, daß die Maske 12 in Wirkstellung steht. Das bedeutet, daß sie im Bereich des Einspiegelungsstrahlengangs E steht. Der von der Lichtquelle L ausgehende Einspiegelungsstrahlengang E wird von der Masken-Platte 11 soweit abgedeckt, daß er nur noch im Bereich der quadratischen Maske 12 weiterlaufen kann. Er trifft sodann auf die Strichplatte 7 und erfaßt gerade noch die Konturen-Fragmente 10, während die auf der Strichplatte 7 auch vorhandenen Konturen-Fragmente 9 von der Masken-Platte 7 "maskiert" bleiben, also vom Beobachter ferngehalten werden.

Nach Drehung der Masken-Platte um die Drehachse 14 befinden sich die vier Masken 13 in Wirkstellung, wobei sie zentrosymmetrisch zur Spur des Einspiegelungsstrahlengangs E angeordnet sind. Die vier Masken 13 geben die Konturen-Fragmente 9 auf der Strichplatte 7 und deren unmittelbares Umfeld frei, sodaß bei eingeschalteter Lichquelle L im Okular-Zwischenbild 19 die Bilder der Konturen-Fragmente 9 als helle Kreuze sichtbar werden.

Durch synchrone Bewegung der Meßblenden-Platte 4 und der Masken-Platte 11 in der Nähe der Strichplatte 7 ist es also möglich, zusätzlich zu der gerade angewählten Meßblende 2 bzw. 3 im Meßstrahlengang M auch gleichzeitig im Beobachtungsstrahlengang B eine entsprechende Meßblenden-Konturierung hell darzustellen. Dies kann in an sich bekannter Weise durch die Synchronisier-Einrichtung 16 erfolgen, die in Wirkverbindung mit den Motoren 6 bzw. 15 steht.

In den Fig. 11a-11c ist eine zweite Ausführungsart der vorliegenden Erfindung dargestellt. In Fig. 11a ist eine Meßblenden-Scheibe 20 gezeigt, die aus opakem Material besteht und rotatorisch, vgl. die Spur der Drehachse 25 - gehaltert ist. In ihrem Peripher-Bereich sind Blenden 22-24 angeordnet, die im dargestellten Fall als Rechteckblenden ausgeführt sind. Errichtet man auf den Längsseiten dieser schlitzförmigen Rechteck-Blenden 22-24 deren jeweilige Mittelsenkrechten, so weisen diese zum Scheiben-Mittelpunkt hin, der mit dem Durchstoßpunkt der Drehachse 25 zusammenfällt.

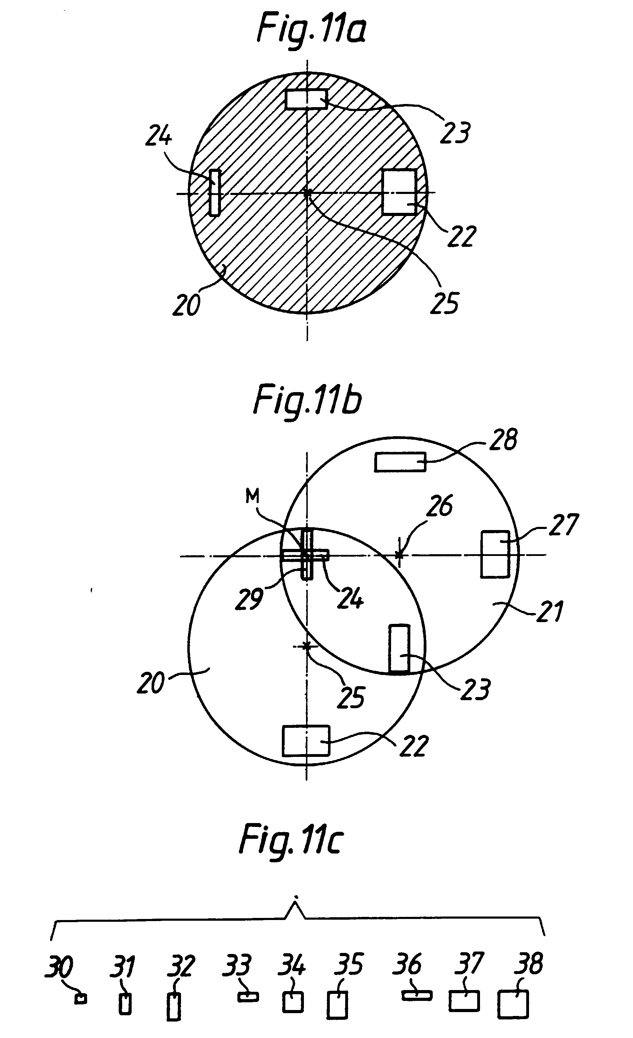

In Fig. 11b sind zwei identische Scheiben 20, 21 der in Fig. 11a dargestellten Art gezeigt, wobei sie sich partiell überlagern und sich zueinander in parallelen, eng beabstandeten Ebenen zueinander befinden. Die Durchstoßpunkte der Drehachsen 25 und 26 sowie der Durchstoßpunkt der optischen Achse des Meßstrahlengangs M auf der Zeichenebene bilden - wie dargestellt - die Eckpunkte eines rechtwinkligen Dreiecks, wobei der rechte Winkel an dem Durchstoßpunkt des Meßstrahlengangs M anliegt. Bei dieser geometrischen Konstellation stehen die in Wirkstellung befindlichen Rechteckblenden 24 und 29 senkrecht aufeinander. Es ist ersichtlich, daß nur der kleine, zentrale, quadratische Überlappungsbereich beider Blenden 24 und 29 im Bereich des Durchstoßpunktes der optischen Achse des Meßstrahlenganges M eine "kombinierte" Blendenöffnung darstellt, die in der Fig. 11c mit der Bezugsziffer 30 gekennzeichnet ist. Die quadratische Blende 34 (Fig. 11c) ist in entsprechender Weise dadurch zu realisieren, daß die Blende 23 der Meßblenden-Scheibe 20 und die Blende 28 der Meßblenden-Scheibe 21 im Bereich des Meßstrahlengangs M superpositioniert werden. Alle anderen in Fig. 11c dargestellten Blenden-Geometrien sind durch entsprechende zyklische Vertauschung aller Einstell-Möglichkeiten gemäß Fig. 11b herstellbar.

Dieses in Fig. 11b dargestellte Meßblenden-Scheiben-Paar 20 und 21 wird anstelle der in Fig. 4 eingezeichneten Meßblenden-Platte 4 positioniert. In analoger Weise wird im Einspiegelungsstrahlengang E anstelle der Masken-Platte 11 ein Masken-Scheiben-Paar installiert, das hinsichtlich seiner Bestückung mit rechteckigen Einzel-Masken sowie hinsichtlich ihrer Anordnung auf den beiden Masken-Scheiben vollständig der in Fig. 11b dargestellten Anordnung entspricht. Die Scheiben-Paar-Anordnungen haben den Vorteil, daß nach diesem Prinzip sowohl Blenden bzw. Masken unterschiedlicher Lage, unterschiedlicher Form und unterschiedlicher Größe dargestellt und synchron in Wirkstellung gebracht werden können. Auf Grund der vorgeschlagenen Anordnung ist die Geometrie der Meßblende bzw. der Maske sehr unempfindlich gegenüber dem Stellwinkel der Scheiben. Es ergibt sich ein einfacher und unkritischer Aufbau.

In einer weiteren Ausgestaltung der vorliegenden Erfindung können die Meßblenden bzw. die Masken mit aufgebrachten Farb- bzw. Graufiltern zum Verändern der Farbe bzw. der Intensität des eingespiegelten oder zu messenden Lichtes versehen sein. Dabei ist es auch möglich, daß z.B. bestimmte Teile der Strichplatte 7 farblich hervorgehoben werden.

Es ist möglich, die erfindungsgemäße Vorrichtung bzw. das erfindungsgemäße Verfahren für die Fotometrie und die Belichtungsmessung einzusetzen, bei der die Meßdaten mehrerer oder aller darstellbarer Meßblenden-Konfigurationen hinzugezogen werden.

Auch ist es möglich, eine Einspiegelung von Strichbildern und Zeigern, beispielsweise durch Ausblenden des aktuellen Teils eines umfangreichen, multifunktionellen Strichbildes, zu realisieren und eine motorische Automatik-Ansteuerung dieser Einspiegelung beispielsweise für die Darstellung von Maßstabs-Markierungen ( m-Marken) beim Objektivwechsel vorzusehen.

Weitere Abänderungen bezüglich der geometrischen Konfigurationen der Blenden bzw. Masken liegen im Rahmen der vorliegenden Erfindung.

### Bezugszeichen-bzw.-Ziffernliste

- A -: Abbildungsstrahlengang
- B -: Beobachtungsstrahlengang
- E -: Einspiegelungsstrahlengang
- M -: Meßstrahlengang
- R -: Rückspiegelungsstrahlengang
- O -: Objekt
- P -: Prismensystem
- L -: Lichtquelle
- T -: Tripelspiegel
- 1 -: Sehfeldrand
- 2 -: kleine (quadratische) Meßblende
- 3 -: große (quadratische) Meßblende
- 4 -: Meßblenden-Platte
- 5 -: Drehachse von (4)
- 6 -: Motor für (4)
- 7 -: Strichplatte
- 8 -: Strichbild von (7)
- 9 -: eines der vier Kreuze (Konturen-Fragment von (3))
- 10 -: eines der vier Kreuze (Konturen-Fragment von (2))
- 11 -: Masken-Platte für (7)
- 12 -: Maske für (10)
- 13 -: Masken für (9)
- 14 -: Drehachse von (11)
- 15 -: Motor für (11)
- 16 -: Synchronisier-Einrichtung
- 17 -: elektrische Verbindung zwischen (16) und (15)
- 18 -: elektrische Verbindung zwischen (16) und (6)
- 19 -: Okular-Zwischenbildebene
- 20,21 -: Meßblenden-Scheiben
- 22-24 -: Blenden in (20)
- 25 -: Drehachse von (20)
- 26 -: Drehachse von (21)
- 27-29 -: Blenden in (21)
- 30-38 -: Meßblenden
- 39 -: teildurchlässige Fläche
- 40 -: (feste) Meßblende
- 41 -: Umlenkprisma
- 42 -: Strichplatte
- 43 -: variable Meßblende
- 44 -: Klappspiegel
- 45 -: konjugierte Ebene

## Patentansprüche

1. Verfahren zur Messung der Belichtungszeit in einem optischen Gerät, das einen mikroskopischen AbbildungsStrahlengang (A), einen Beobachtungsstrahlengang (B), einen Meßstrahlengang (M),einen Einspiegelungsstrahlengang (E) sowie eine Vorrichtung zur Messung von Belichtungszeiten aufweist,
dadurch gekennzeichnet, daß
a) der Meßstrahlengang (M) eine Meßblendenvorrichtung zur Einstellung von Blenden (4, 20, 21) unterschiedlicher Größe durch Einbringen von verschieden großen Meßblenden in dem Meßstrahlengang (M) in einer zur Ebene des Objekts (O) konjugierten Zwischenbildebene aufweist,
b) im Einspiegelungsstrahlengang (E) eine Lichtquelle (L), eine in einer zur Okular-Zwischenbildebene (19) konjugierten Ebene positionierte Strichplatte (7,8) mit Konturierungen von verschiedenen, im Meßstrahlengang (M) erzeugbaren Meßblenden, und eine in der Nähe der Strichplatte angeordnete Maske (11) zur selektiven Anzeige einer Konturierung im Beobachtungsstrahlengang (B) angeordnet ist, und daß
c) die Maskenplatte und die Meßblenden derart synchron bewegt werden, daß die im Beobachtungsstrahlengang (B) angezeigte Konturierung jeweils der im Meßstrahlengang (M) positionierten Meßblende entspricht.

2. Verfahren nach Anspruch 1,
**dadurch gekennzeichnet,**
daß die Steuerung der Synchron-Bewegung der Meßblenden-Platte (4) und der Masken-Platte (11) mittels einer Synchronisier-Einrichtung (16) erfolgt, die mit Motoren (6 bzw. 15) in Wirkverbindung stehen, welche über Drehachsen (5 bzw. 14) die Bewegung der Platten (4 bzw. 11) bewerkstelligen.

3. Verfahren nach einem der Ansprüche 1 und 2,
**dadurch gekennzeichnet,**
daß zur Realisierung orts- und/oder größenvariabler Meßblenden (30-38) im Meßstrahlengang (M) sowie äquivalenter orts- und/oder größenvariabler Masken im Einspiegelungsstrahlengang (E) ein sich teilweise überlappendes Paar von jeweils mehrere Blenden (22-24; 27-29) enthaltenden Meßblenden-Scheiben (20; 21) sowie ein analoges Paar von jeweils mehrere äquivalente Masken enthaltenden Masken-Scheiben derart beweglich angeordnet sind, daß durch geometrische Überlagerung einer auf der ersten Meßblenden-Scheibe (21) angeordneten Blende (22 bzw. 23 bzw. 24) mit einer auf der zweiten Meßblenden-Scheibe (21) angeordneten Blende (27 bzw. 28 bzw. 29) im Bereich des Meßstrahlengangs (M) eine resultierende Meßblende (30-38) einstellbar ist, die mit einer in analoger Weise durch geometrische Überlagerung einer auf der ersten Masken-Scheibe angeordneten Maske mit einer auf der zweiten Masken-Scheibe angeordneten Maske im Bereich des Einspiegelungsstrahlengangs (E) erzeugbaren resultierenden Maske korrespondiert.

4. Verfahren nach mindestens einem der vorhergehenden Ansprüche,
**dadurch gekennzeichnet,**
daß die auf der Strichplatte aufgebrachten Konturen bzw. Konturen-Fragmente der Meßblenden (2, 3) beim Einspiegeln in den Beobachtungsstrahlengang (B) im Okular-Zwischenbild (19) als helle Konturierungen erscheinen.

5. Optisches Gerät, das einen mikroskopischen Abbildungsstrahlengang (A), einen Beobachtungsstrahlengang (B), einen Meßstrahlengang (M), einen Einspiegelungsstrahlengang (E) sowie eine Vorrichtung zur Messung von Belichtungszeiten aufweist, wobei
die Ankopplung des Einspiegelungsstrahlengangs (E) sowie die Auskopplung des Beobachtungsstrahlengangs (B) über ein im Abbildungsstrahlengang (A) angeordnetes, eine teildurchlässige Fläche (39) aufweisendes zusammengesetztes Prismensystem (P) erfolgt, dadurch gekennzeichnet, daß
a) im Meßstrahlengang (M) eine Meßblenden-Einrichtung angeordnet ist, die mindestens zwei bewegbare Meßblenden (4, 20, 21) unterschiedlicher Größe enthält zur Erzeugung verschieden großer Meßblenden im Meßstrahlengang (M) in einer zur Ebene des Objekts (O) konjugierten Zwischenbildebene,
b) im Einspiegelungsstrahlengang (E) eine Lichtquelle (L), eine in einer zur Okular-Zwischenbildebene (19) konjugierten Ebene positionierte Strichplatte (7,8) mit Konturierungen von verschiedenen, im Meßstrahlengang (M) erzeugbaren Meßblenden, und eine in der Nähe der Strichplatte angeordnete Masken-Einrichtung (11, 14, 15) zur selektiven Anzeige einer Konturierung im Beobachtungsstrahlengang (B), und daß
c) eine Synchronisations-Einrichtung (16, 17,18) zwischen Meßblenden-Einrichtung und Masken-Einrichtung bewirkt, daß sich die selektierte und die angezeigte jeweils Meßblende entsprechen.

6. Gerät nach Anspruch 5,
**dadurch gekennzeichnet**
daß die Strichplatte (7) inverse Konturen bzw. inverse Konturen-Fragmente der auf der Meßblenden-Platte (4) befindlichen Meßblenden (2, 3) - vorzugweise in Form von Linien, Strichlinien, Punkten oder Eck-Kreuzen - enthält derart, daß sie als transparente Teilbereiche auf der opaken Strichplatte (7) aufgebracht sind.

7. Gerät nach einem der Ansprüche 5 und 6,
**dadurch gekennzeichnet,**
daß ein Motor (6) über eine Drehachse (5) mit der Meßblenden-Platte (4), sowie ein Motor (15) über eine Drehachse (14) mit der Masken-Platte (11) verbunden ist und daß die Motoren (6, 15) von einer Synchronisier-Einrichtung (16) über elektrische Verbindungen (18, 17) gesteuert werden.

8. Gerät nach mindestens einem der Ansprüche 5 bis 7,
**dadurch gekennzeichnet,** daß
(a) im Meßstrahlengang (M) zwei sich partiell überlappende, opake, rotatorisch gelagerte Meßblenden-Scheiben (20, 21) vorgesehen sind, die in ihren jeweiligen Peripher-Bereichen Blenden (22-24; 27-29) unterschiedlicher Dimensionierungen in Form von flächenhaften Ansnehmungen aufweisen, wobei ihre Drehachsen (25, 26) derart positioniert sind, daß sie parallel zur Achse des Meßstrahlengangs (M) verlaufen, und daß
(b) im Einspiegelungsstrahlengang (E) zwei analoge, sich partiell überlappende, opake, rotatorisch gelagerte Masken-Scheiben vorgesehen sind, die in ihren jeweiligen Peripher-Bereichen Masken entsprechender Dimensionierungen in Form von flächenhaften Ausnehmungen aufweisen, wobei ihre Drehachsen derart positioniert sind, daß sie parallel zur Achse des Einspiegelungsstrahlengangs (E) verlaufen.

9. Gerät nach Anspruch 8,
**dadurch gekennzeichnet,**
daß die Blenden-Scheiben (20 bzw. 21) sowie die darauf angebrachten Blenden (22-24 bzw. 27-29) hinsichtlich ihrer Geometrie, ihrer Dimensionierung und ihrer Positionierung identisch sind.

10. Gerät nach Anspruch 8,
**dadurch gekennzeichnet,**
daß die analogen Masken-Scheiben sowie die darauf angebrachten Masken hinsichtlich ihrer Geometrie, ihrer Dimensionierung und ihrer Positionierung identisch sind.

11. Gerät nach mindestens einem der Ansprüche 8 bis 10,
**dadurch gekennzeichnet,**
daß die Blenden (22-24; 27-29) bzw. die Masken schlitzförmige Rechteck-Blenden bzw. -Masken sind.

12. Gerät nach mindestens einem der Ansprüche 8 bis 11,
**dadurch gekennzeichnet,**
daß die Spuren der Drehachse (25 und 26) zusammen mit der Spur der Achse des Meßstrahlengangs (M) ein rechtwinkliges Dreieck bildet, wobei der rechte Winkel an der Spur der Achse des Meßstrahlengangs (M) anliegt.

13. Gerät nach mindestens einem der Ansprüche 8 bis 11,
**dadurch gekennzeichnet,**
daß die Spuren der Drehachsen beider Masken-Scheiben zusammen mit der Spur der Achse des Einspiegelungsstrahlengangs (E) ein rechtwinkliges Dreieck bildet, wobei der rechte Winkel an der Spur der Achse des Einspiegelungsstrahlengangs (E) anliegt.

14. Gerät nach Anspruch 11,
**dadurch gekennzeichnet,**
daß jede der Rechteck-Blenden (22-24; 27-29) derart auf den Meßblenden-Scheiben (20, 21) angeordnet ist, daß eine auf deren Längsseite errichtete Mittelsenkrechte jeweils auf den Mittelpunkt (25, 26) der entsprechenden Scheibe (20 bzw. 21) weist.

15. Gerät nach Anspruch 11,
**dadurch gekennzeichnet,**
daß jede der Rechteck-Masken derart auf den Masken-Scheiben angeordnet ist, daß eine auf deren Längsseite errichtete Mittelsenkrechte jeweils auf den Mittelpunkt der entsprechenden Masken-Scheibe weist.

16. Gerät nach mindestens einem der Ansprüche 8 bis 15,
**dadurch gekennzeichnet,**
daß Mittel zum synchronen Verstellen des Meßblenden-Scheiben-Paares und des Masken-Scheiben-Paares untereinander, sowie zusätzlich zwischen den beiden Scheiben-Paaren vorgesehen sind.

17. Gerät nach mindestens einem den Ansprüche 5 bis 16,
**dadurch gekennzeichnet,**
daß die Meßblenden (2,3; 22-24; 27-29) bzw. die Masken (12, 13) mit aufgebrachten Farb- bzw. Graufiltern versehen sind.

18. Verwendung des Verfahrens bzw. des Geräts nach einem der vorhergehenden Ansprüche für Fotometrie und Belichtungszeitmessung, bei der die Meßdaten mehrerer oder aller darstellbarer Meßblenden-Konfigurationen abgespeichert und ausgewertet werden.

19. Verfahren bzw. Gerät nach mindestens einem der Ansprüche 1-17,
**gekennzeichnet durch** die Einspiegelung von Strichbildern und Zeigern mittels definierten Ausblendens des aktuellen Teils eines multifunktionellen Strichplatten-Musters für die bildliche Darstellung von Maßstäben und Skalen.

## Claims

1. Method for the measurement of the exposure time in an optical instrument which has a microscope imaging ray path (A), an observation ray path (B), a measurement ray path (M), a reflection entry ray path (E) as well as a device for the measurement of exposure times, characterised thereby, that
a) the measurement ray path (M) comprises a measurement light stop device for the setting of light stops (4, 20, 21) of different size by the introduction of differently large light stops into the measurement ray path (M) in an intermediate image plane conjugate to the plane of the object (0),
b) a light source (L), a graticule plate (7, 8) with outline markings of different measurement light stops producible in the measurement ray path (M) and positioned in a plane conjugate to the eyepiece intermediate image plane (19) and a mask (11) arranged in the proximity of the graticule plate and for the selective indication of an outline marking in the observation ray path (B) are arranged in the reflection entry ray path (E) and that
c) the mask plate and the measurement light steps are moved synchronously in such a manner that the outline marking indicated in the observation ray path (B) corresponds each time with the measurement light stop positioned in the measurement ray path (M).

2. Method according to claim 1, characterised thereby, that the control of the synchronous movement of the measurement light stop plate (4) and the mask plate (11) takes place by means of a synchronising equipment (16), which stands in operative connection with motors (6 or 15), which accomplish the movement of the plates (4 or 11) by way of rotary axles.

3. Method according to one of the claims 1 and 2, characterised thereby, that for the realisation of measurement light stops (30 to 38), which are variable in location and/or size, in the measurment ray path (M) as well as equivalent masks, which are variable in location and/or size, in the reflection entry ray path (E), a partially overlapping pair of measurement light stop discs (20; 21) each containing several light stops (22 to 24; 27 to 29) as well as an analogous pair of mask discs each containing several equivalent masks are arranged to be movable in such a manner that, by geometric superposition of a light stop (22 or 23 or 24) arranged on the first measurement light stop disc (20) and a light stop (27 or 28 or 29) arranged on the second measurement light stop disc (21) in the region of the measurement ray path (M), a resultant measurement light stop (30 to 38) is settable, which corresponds with a resultant mask producible in analogous manner by geometric superposition of a mask arranged on the first mark disc and a mask arranged on the second mask disc in the region of the reflection entry ray path (E).

4. Method according to at least one of th preceding claims, characterised thereby, that the outlines or outline fragments, which are applied on the graticule plate, of the measurement light stops (2, 3) on reflection into the observation ray path (B) appear as bright outline markings in the eyepiece intermediate image (19).

5. Optical instrument which has a microscope imaging ray path (A), an observation ray path (B), a measurement ray path (M), a reflection entry ray path (E) as well as a device for the measurement of exposure times, wherein
the coupling-on of the reflection entry ray path (E) as well as the coupling-out of the observation ray path (B) takes place by way of a composite prism system (P), which is arranged in the imaging ray path (A) and includes a translucent surface (39), characterised thereby, that
a) a measurement light stop equipment is arranged in the measurement ray path (M) and contains at least two movable measurement light stops (4, 20, 21) of different size for the production of differently sized measurement light stops in the measurement ray path (M) in an intermediate image plane conjugate to the plane of the object (0),
b) a light source (L), a graticule plate (7, 8) with outline markings of different measurement light stops producible in the measurement ray path (M) and positioned in a plane conjugate to the eyepiece intermediate image plane (19) and a mask equipment (11, 14, 15) arranged in the proximity of the graticule plate and for the selective indication of an outline marking in the observation ray path (B) are arranged in the reflection entry ray path (E) and that
c) a synchronising equipment (16, 17, 18) between the measurement light stop equipment and the mask equipment have the effect that the selected and the indicated measurement light stop correspond each time.

6. Instrument according to claim 5, characterised thereby, that the graticule plate (7) contains inverse outlines or inverse outline fragments of the measurement light stops (2, 3) situated on the measurement light stop plate (4) - preferably in the shape of lines, dotted lines, points or corner crosses - in such a manner that they are applied as transparent part regions on the opaque graticule plate (7).

7. Instrument according to one of the claims 5 and 6, characterised thereby, that a motor (6) is connected by way of a rotary axle (5) with the measurement light stop plate (4) as well as a motor (15) is connected by way of a rotary axle (14) with the mask plate (11) and that the motors (6, 15) are controlled by a synchronising equipment (16) by way of electrical connections (18, 17).

8. Instrument according to at least one of the claims 5 to 7, characterised thereby, that
a) two partially overlapping, opaque and rotationally borne measurement light stop discs (20, 21), which in their respective peripheral regions have light stops (22 to 24; 27 to 29) of different dimensions and in the shape of areal cut-outs, are provided in the measurement ray path (M), wherein their rotary axles (25, 26) are positioned in such a manner that they extend parallelly to the measurement ray path (M) and that
b) two analogous partially overlapping, opaque and rotationally borne mask discs, which in their respective peripheral regions have masks of corresponding dimensions and in the shape of areal cutouts, are provided in the reflection entry ray path (E), wherein their rotary axles are positioned in such a manner that they extend parallelly to the reflection entry ray path (E).

9. Instrument according to claim 8, characterised thereby, that the light stop discs (20 or 21) as well as the light stops (22 to 24 or 27 to 29) applied thereon are identical with respect to their geometry, their dimensioning and their positioning.

10. Instrument according to claim 8, characterised thereby, that the analogous mask discs as well as the masks applied thereon are identical with respect to their geometry, their dimensioning and their positioning.

11. Instrument according to at least one of the claims 8 to 10, characterised thereby, that the light stops (22 to 24 or 27 to 29) and the masks are slot-shaped rectangular light stops and masks, respectively.

12. Instrument according to at least one of the claims 8 to 11, characterised thereby, that the tracks of the rotary axle (25 and 26) together with the track of the axis of the measurement ray path (M) form a right-angled triangle, wherein the right angle lies against the track of the axis of the measurement ray path (M).

13. Instrument according to at least one of the claims 8 to 11, characterised thereby, that the tracks of the rotary axles of the mask discs together with the track of the axis of the reflection entry ray path (E) form a right-angled triangle, wherein the right angle lies against the track of the axis of the reflection entry ray path (E).

14. Instrument according to claim 11, characterised thereby, that each of the rectangular light stops (22 to 24; 27 to 29) is arranged on the measurement light stop discs (20, 21) in such a manner that a centre normal set onto its long side always points to the centre (25, 26) of the corresponding disc (20 or 21).

15. Instrument according to claim 11, characterised thereby, that each of the rectangular masks is arranged on the masks discs in such a manner that a centre normal set onto its long side always points to the centre of the corresponding disc.

16. Instrument according to at least one of the claims 8 to 15, characterised thereby, that means are provided for the synchronous displacing of the measurement light stop disc pair and the mask disc pair one among the other as well as additionally between both the disc pairs.

17. Instrument according to at least one of the claims 5 to 16, characterised thereby, that the measurement light stops (2, 3; 22 to 24; 27 to 29) and the masks (12, 13) are respectively provided with applied colour and grey filters.

18. Use of the method or the instrument according to one of the preceding claims for photometry and exposure time measurements, for which the measurement data of several or all representable measurement light stop configurations are stored and evaluated.

19. Method or instrument according to at least one of the claims 1 to 17, characterised by the inward reflection of line images and pointers by means of defined masking of the relevant part of a multifunctional graticule plate pattern for the pictorial representation of scales and graduations.

## Revendications

1. Procédé pour la mesure du temps d'exposition dans un appareil optique, qui présente une trajectoire des rayons d'images microcospiques (A), une trajectoire des rayons d'observation (B), une trajectoire des rayons de mesure (M), une trajectoire des rayons de réflexion (E) ainsi qu'un dispositif pour la mesure des temps d'exposition,
caractérisé en ce que
a) la trajectoire des rayons de mesure (M) présente un dispositif pour diaphragmes de mesure pour l'ajustement de diaphragmes (4, 20, 21) de différentes grandeurs par mise en place de diaphragmes de mesure de diverses grandeurs dans la trajectoire des rayons de mesure (M) dans un plan d'image intermédiaire conjugué au plan de l'objet (O),
b) dans la trajectoire des rayons de réflexion (E) est agencée une source de lumière (L), une plaque réticulée (7, 8) placée dans un plan conjugué au plan d'image intermédiaire de l'oculaire (19) avec contourage de divers diaphragmes de mesure pouvant être produits dans la trajectoire des rayons de mesure (M) et un masque (11) agencé à proximité de la plaque réticulée pour l'indication sélective d'un contourage dans la trajectoire des rayons d'observation (B), et en ce que
(c) la plaque à masques et les diaphragmes de mesure sont déplacés en synchronisme de manière que le contourage indiqué dans la trajectoire des rayons d'observation (B) corresponde en tout moment au diaphragme de mesure placé dans la trajectoire des rayons de mesure (M).

2. Procédé selon la revendication 1,
caractérisé en ce que
la commande du mouvement synchrone de la plaque de diaphragmes de mesure (4) et de la plaque à masques (11) se produit au moyen d'un dispositif synchronisé (16) qui se trouvent en liaison active avec des moteurs (6) ou respectivement (15) qui réalisent, par des axes de rotation (5) ou respectivement (14), le mouvement des plaques (4) ou respectivement (11);

3. Procédé selon l'une des revendication 1 et 2
caractérisé en ce que
pour la réalisation de diaphragmes de mesure à lieu et/ou à grandeur variables (30-38) dans la trajectoire des rayons de mesure (M) ainsi que des masques à lieu et/ou grandeur variables équivalents dans la trajectoire des rayons de réflexion (E), on agence mobile une paire se recouvrant partiellement de disques de diaphragmes de mesure (20 ; 21) contenant à chaque fois plusieurs diaphragmes (22-24 ; 27-29) ainsi qu'une paire analogue de disques de masques contenant à chaque fois plusieurs masques équivalents de façon que, par le recouvrement géométrique d'un diaphragme (22) ou respectivement (23) ou respectivement (24) agencé sur le premier disque (21) de diaphragmes de mesure avec un diaphragme (27) ou respectivement (28) ou respectivement (29) agencé sur le second disque (21) de diaphragmes de mesure, dans la zone de la trajectoire des rayons de mesure (M), on puisse établir un diaphragme de mesure résultant (30-38) qui correspond au masque résultant pouvant être produit d'une manière analogue par recouvrement géométrique d'un masque agencé sur le premier disque à masques avec un masque agencé sur le second disque à masques dans la zone de la trajectoire des rayons de réflexion (E).

4. Procédé selon au moins l'une des revendications précédentes
caractérisé en ce que
les contours prévus sur la plaque réticulée ou respectivement les fragments de contour des diaphragmes de mesure (2, 3) apparaissent lors d'une réflexion dans la trajectoire des rayons d'observation (8) dans l'image intermédiaire (19) de l'oculaire sous la forme de contourages clairs.

5. Appareil optique qui présente une trajectoire des rayons d'images microscopiques (A), une trajectoire des rayons d'observation (B), une trajectoire des rayons de mesure (M), une trajectoire des rayons de réflexion (E) ainsi qu'un dispositif pour la mesure des temps d'exposition, où
le couplage de la trajectoire des rayons de réflexion (E) ainsi que le découplage de la trajectoire des rayons d'observation (B) se produit par un système de prisme (P) agencé dans la trajectoire des rayons d'images (A) présentant une surface (39) partiellement transparente,
caractérisé en ce que
a) dans la trajectoire des rayons de mesure (M) est agencé un dispositif à diaphragmes de mesure qui contient au moins deux diaphragmes de mesure mobiles (4, 20, 21) de grandeurs différentes pour la production de diaphragmes de mesure de grandeurs différentes dans la trajectoire des rayons de mesure (M) dans un plan d'image intermédiaire conjugué au plan de l'objet (O),
b) dans la trajectoire des rayons de réflexion (E) une source de lumière (L), une plaque réticulée (7, 8) placée dans un plan conjugué au plan d'image intermédiaire de l'oculaire (19) avec conturages de divers diaphragmes de mesure pouvant être produits dans la trajectoire des rayons de mesure (M) et un dispositif à masques (11, 14, 15) agencé à proximité de la plaque réticulée pour l'indication sélective d'un contourage dans la trajectoire des rayons d'observation (B) et en ce que
c) un dispositif de synchronisation (16, 17, 18) entre le dispositif des diaphragmes de mesure et le dispositif des masques a pour effet que les diaphragmes de mesure sélectionnés et indiqués correspondent en tout moment.

6. Appareil selon la revendication 5,
caractérisé en ce que
la plaque réticulée (7) contient des contours inverses ou respectivement des fragments de contour inverses des diaphragmes de mesure (2, 3) se trouvant sur la plaque (4) des diaphragmes de mesure, avantageusement sous la forme d'une ligne, ligne en tirets, points, ou croix dans les coins de manière qu'ils se présentent sous la forme de zones partielles transparentes sur la plaque réticulée opaque (7).

7. Appareil selon l'une des revendications 5 et 6, caractérisé en ce qu'un moteur (6) est relié par un axe de rotation (5) avec la plaque (4) à diaphragmes de mesure et un moteur (15) est relié par un axe de rotation (14) à la plaque (11) à masques et en ce que les moteurs (6, 15) sont commandés par un dispositif de synchronisation (16) au moyen de liaisons électriques (18, 17).

8. Appareil selon au moins l'une des revendications 5 à 7,
caractérisé en ce que
a) dans la trajectoire des rayons de mesure (M) sont prévus deux disques à diaphragmes de mesure placés en se recouvrant partiellement, opaques, rotatifs (20, 21) qui présentent dans leur zone périphérique, des diaphragmes (22-24 ; 27-29) de diverses dimensions sous la forme d'évidements de surface et les axes de rotation (25, 26) sont placés de manière à être parallèles à l'axe de la trajectoire des rayons de mesure (M) et en ce que
b) dans la trajectoire des rayons de réflexion (E) sont prévus deux disques à masques placés en se recouvrant partiellement, opaques, rotatifs, qui présentent, dans leur zone périphérique, des masques de dimensions correspondantes sous la forme d'évidements de surface, leurs axes de rotation étant placés de façon à passer parallèlement à l'axe de la trajectoire des rayons de réflexion (E).

9. Appareil selon la revendication 8,
caractérisé en ce que
les disques à diaphragmes (20 ou 21) ainsi que les diaphragmes qui y sont prévus (22-24) ou respectivement (27-29) sont identiques en ce qui concerne leur géométrie, leur dimensionnement et leur positionnement.

10. Appareil selon la revendication 8,
caractérisé en ce que
les disques à masques analogues ainsi que les masques qui y sont prévus sont identiques en- ce qui concerne leur géométrie, leur dimensionnement et leur positionnement.

11. Appareil selon au moins l'une des revendications 8 à 10,
caractérisé en ce que
les diaphragmes (22-24 ; 27-29) ou respectivement les masques sont des diaphragmes ou respectivement des masques en forme de rectangles en fente.

12. Appareil selon au moins l'une des revendications 8 à 11,
caractérisé en ce que
les traces des axes de rotation (25 et 26) forment avec la trace de l'axe de la trajectoire des rayons de mesure (M) un triangle rectangle, l'angle droit se trouvant sur la trace de l'axe de la trajectoire des rayons de mesure (M).

13. Appareil selon au moins l'une des revendications 8 à 11,
caractérisé en ce que
les traces des axes de rotation des deux disques à masques forment avec la trace de l'axe de la trajectoire des rayons de réflexion (E) un triangle rectangle et l'angle droit se trouve sur la trace de l'axe de la trajectoire des rayons de réflexion (E).

14. Appareil selon la revendication 11,
caractérisé en ce que
chacun des diaphragmes rectangulaires (22, 24 ; 27-29) est agencé sur les disques à diaphragmes de mesure (20, 21) de manière qu'une médiatrice dressée sur le côté longitudinal soit toujours dirigée vers le centre (25, 26) du disque correspondant (20) ou respectivement (21).

15. Appareil selon la revendication 11,
caractérisé en ce que
chacun des masques rectangulaires est agencé sur les disques à masques de manière qu'une médiatrice dressée sur le côté long corresponde toujours au centre du disque à masques correspondant.

16. Appareil selon au moins l'une des revendications 8 à 15,
caractérisé en ce que
des moyens sont prévus pour le déplacement synchrone de la paire de disques à diaphragmes de mesure et de la paire de disques à masques ainsi que, de plus, entre les deux paires de disques.

17. Appareil selon au moins l'une des revendications 5 à 16,
caractérisé en ce que
les diaphragmes de mesure (2, 3 ; 22-24 ; 27-29) ou respectivement les masques (12, 13) sont pourvus de filtres de couleur ou respectivement du gris.

18. Utilisation du procédé ou respectivement de l'appareil selon l'une des revendications précédentes pour la photométrie et la mesure du temps d'exposition, où les données de mesure de plusieurs ou de toutes les configurations représentables des diaphragmes de mesure sont mémorisées et exploitées.

19. Procédé ou respectivement appareil selon au moins l'une des revendications 1-17, caractérisé par la réflexion d'images réticulées et d'indices au moyen d'une suppression définie de la partie réelle d'un modèle de la plaque réticulée multifonctionnelle pour la représentation imagée de règles graduées et d'échelles.
